# EUROPEAN PATENT SPECIFICATION

(11) **EP 1 995 399 B1**
(45) Date of publication and mention of the grant of the patent: **04.01.2017**
(21) Application number: 07714674.4
(22) Date of filing: 21.02.2007
(51) Int. Cl.: E05B 77/06, E05B 85/16

(54) **DOOR HANDLE DEVICE FOR AUTOMOBILE**
TÜRGRIFFVORRICHTUNG FÜR KRAFTFAHRZEUG
DISPOSITIF DE POIGNEE DE PORTE POUR AUTOMOBILE

(30) Priority: 28.02.2006 JP 2006053916
(43) Date of publication of application: 26.11.2008
(73) Proprietor: ALPHA CORPORATION, Yokohama-shi, Kanagawa 236-0004 (JP)
(72) Inventor: WATANABE, Naoki, Yokohama-shi, Kanagawa 236-0004 (JP); KUBOTA, Satoshi, Yokohama-shi, Kanagawa 236-0004 (JP)
(74) Representative: Grünecker Patent- und Rechtsanwälte PartG mbB
(86) International application number: PCT/JP2007/053174
(87) International publication number: WO 2007/105434

(56) References cited:
- EP-A- 0 684 357
- EP-A- 1 593 802
- WO-A-2004/042177
- DE-A1- 4 130 847
- DE-A1- 19 901 279
- DE-C1- 3 825 593
- JP-A- 10 018 664
- JP-A- 2001 012 113
- JP-A- 2003 013 629
- JP-A- 2004 068 387
- US-A1- 2001 035 656

## Description

### TECHNICAL FIELD

The present invention relates to an automotive door handle device for which measures enabling a door to be prevented from opening by an impact acceleration at a time of side collision and so on are taken.

### BACKGROUND ART

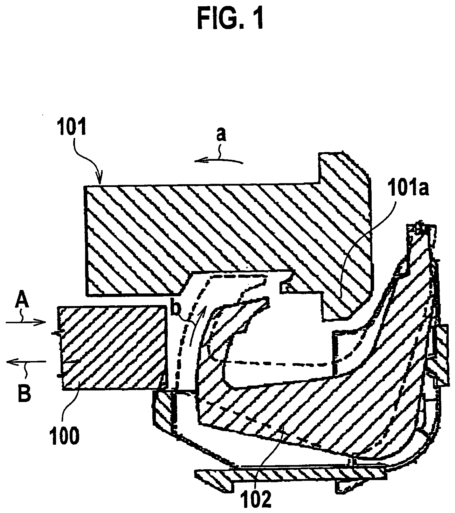

As a conventional automotive door handle device of this type, there is one disclosed in JP 2001-12113 A. As shown in FIG. 1, this automotive door handle device includes a grip-type handle 101 that is provided on a door body 100 so as to be freely rotatable, and is rotationally operated between a door closing position and a door opening position. In the door body 101, a stopper member 102 is provided so as to be freely rotatable between a waiting position (solid-line position of FIG.1) and an interfering position (broken-line position of FIG. 1). The stopper member 102 is urged to the waiting position side (solid-line position side of the drawing) by urging means (not shown). The waiting position of the stopper member 102 is set to be a position outside of a rotation orbit of an engagement portion 101a of the handle 101, and the interfering position of the stopper member 102 is set to be a position inside of the rotation orbit of the engagement portion 101a.

In the above-described configuration, when an impact acceleration A in a direction of moving the handle 101 from the door closing position to the door opening position is inputted to the door body 100, the handle 101 moves to an opening position direction a by this impact acceleration, and the stopper member 102 moves to an interfering position direction b against urging force of urging means (not shown). Here, the stopper member 102 moves to an interference enabled section earlier than the handle 101, and interferes with the engagement portion 101a of the handle 101. By such interference of the stopper member 102, the handle 101 is inhibited from moving to the door opening position side. In such a way as described above, the door can be prevented from opening by the impact acceleration at a time of side collision and so on.

Note that, when an impact acceleration B in a direction of moving the handle 101 from the door opening position to the door closing position is inputted to the door body 100, the door does not open by the impact acceleration in this direction.

### DISCLOSURE OF THE INVENTION

Incidentally, as a condition where the stopper member 102 surely carries out a function of the stopper, it is listed that, when the impact acceleration A is inputted to the door body, the stopper member 102 should reach the interfering position earlier than the engagement portion 101a of the handle 101. This condition is easily achievable by setting the stopper member 102 so as to be movable more easily than the handle 101 when the impact acceleration is inputted to the door body.

Moreover, as another important condition, it is listed that the stopper member 102 urged to the waiting position side by the urging means (not shown) should stay in the interference enabled section for a long time. This is because a situation where the stopper member 102 does not interfere with the engagement portion 101a of the handle 101 occurs when the stopper member 102 quickly returns to such a non-interfering position even if the stopper member 102 quickly reaches the interference enabled section. However, in the above-described conventional example, contrivance for allowing the stopper member 102 to stay in the interference enabled section for a long time is not made at all, and there is an apprehension that the stopper member 102 may not function normally.

Another door handle device according to the preamble of claim 1 is known from DE 199 01 279 A1, which in particular comprises a stopper holding means for elongating a holding time of the stopper member in a section where the stopper member is capable of interfering with the engagement portion.

In this connection, it is an object of the present invention to provide an automotive door handle device with an alternative arrangement for securely inhibiting the handle from moving in the opening position direction at the time of the side collision and so on.

In order to achieve the above-described object, the present invention provides an automotive door handle device, including: a handle that is provided on a door body so as to be freely rotatable and moves between a door closing position and a door opening position; a lever that rotates from a waiting position to a lock releasing position in synchronization with an operation of the handle from the door closing position to the door opening position, and releases locking of a door locking mechanism; a stopper member that is provided on the door body so as to be freely rotatable, is movable between a waiting position of not interfering with an engagement portion provided on either one of the handle and the lever and an interfering position of interfering with the engagement portion, and is urged to the waiting position side by urging means; and stopper holding means for elongating a holding time of the stopper member in a section where the stopper member is capable of interfering with the engagement portion, wherein, when an impact acceleration in a direction of moving the handle from the door closing position to the door opening position is inputted to the door body, the stopper moves in an interfering position direction from the waiting position against urging force of the urging means by the impact acceleration, is engaged with the handle or the lever, and inhibits the lever from moving to the lock releasing position, characterized in that one end of the stopper member is supported on a rotation support shaft of the door body side so as to be freely rotatable thereabout and urged to the waiting position side by urging means, the other end of the stopper member can interfere with the engagement portion provided on either one the handle and the lever at the interfering position, a rotation regulating portion is provided on a middle portion of the stopper member, the stopper holding means is a shock absorption member provided on a thrusting surface of at least either one of the stopper-side rotation regulating portion of the stopper member and an other-side rotation regulating portion against which the stopper-side rotation regulating portion thrusts at the interfering position.

In accordance with the above-described configuration, upon receiving the impact acceleration in the direction of moving the handle from the door closing position to the door opening position, the stopper member moves in the interfering position direction from the waiting position against the urging force of the urging means, bounds against the interfering position, and returns again to the waiting position. However, during such a reciprocating movement, in an interference enabled section, the stopper member moves while spending a longer time than heretofore by the stopper holding means, and accordingly, can surely inhibit the handle from moving in the opening position direction.

Furthermore, in accordance with this configuration, when the stopper member moves to the interfering position, the stopper-side rotation regulating portion and the other-side rotation regulating portion thrust against each other while interposing the shock absorption member therebetween. Accordingly, a bound speed of the stopper member becomes slow. Hence, the stopper member stays in the interference enabled section for a long time, and accordingly, can surely inhibit the handle from moving in the opening position direction.

Moreover, in the above-described configuration, the stopper member may be disposed so that a rotation support shaft that freely rotatably supports the stopper member on the door body can go along a fore-and-aft direction of a vehicle.

In accordance with this configuration, the stopper member is surely activated not only in the case where the impact acceleration is inputted from a side surface of a vehicle body but also in the case where the impact acceleration is inputted from an oblique direction of the vehicle body.

### BRIEF DESCRIPTION OF THE DRAWINGS

FIG. 1 is a main portion cross-sectional view of an automotive door handle device of a conventional example.
FIG. 2 shows a first embodiment of the present invention, and is a cross-sectional view of an automotive door handle device.
FIG. 3 shows the first embodiment of the present invention, and is an internal view of the automotive door handle device viewed from a vehicle inside.
FIG. 4 shows the first embodiment of the present invention, and is a main portion cross-sectional view of peripheries of a stopper member and a handle.
FIG. 5 shows a second embodiment of the present invention, and is a main portion cross-sectional view of peripheries of a stopper member and a handle.
FIG. 6 shows an example not forming part of the present invention, and is a main portion cross-sectional view of peripheries of a stopper member and a handle.
FIGS. 7(a) and 7(b) show further views of the example of Fig. 6:

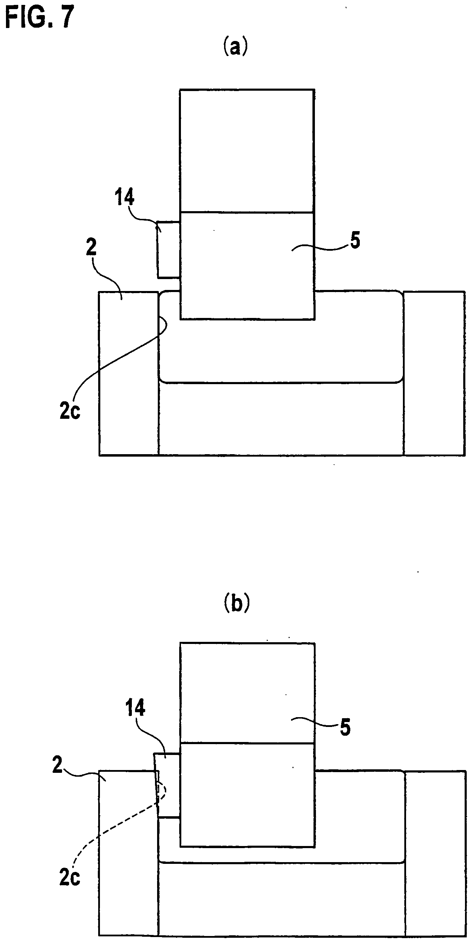

   FIG. 7(a) is a plan view of a state where the stopper member is located at a waiting position; and FIG. 7 (b) is a plan view of a state where the stopper member is located in an interference enabled section.

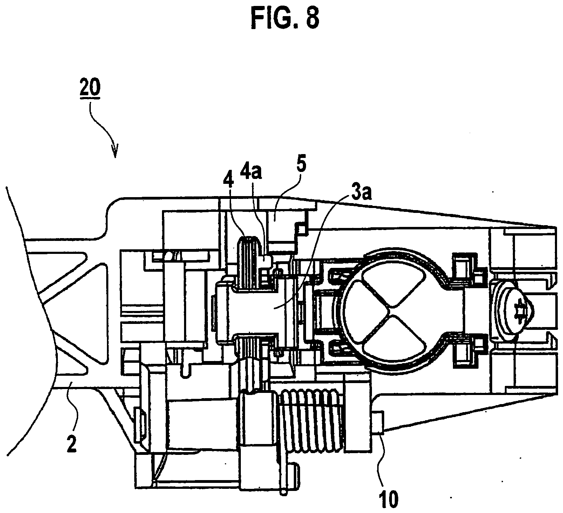

FIG. 8 shows a third embodiment of the present invention, and is a main portion internal view of an automotive door handle device viewed from the vehicle inside.

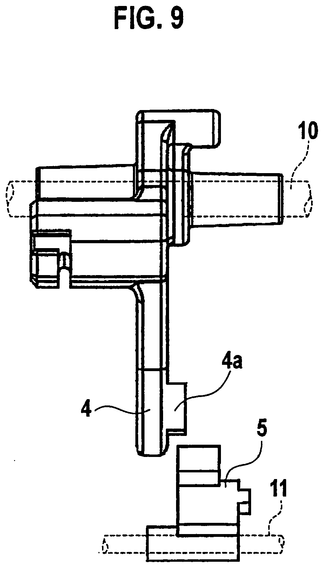

FIG. 9 shows the third embodiment of the present invention, and is a front view showing arrangement of a stopper member and a lever.

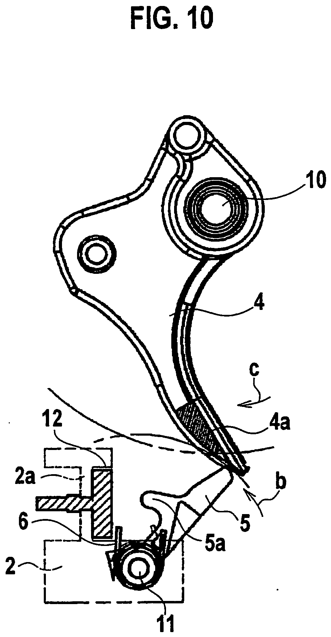

FIG. 10 shows the third embodiment of the present invention, and is a side view showing a state where both of the stopper member and the lever are located at the waiting position.

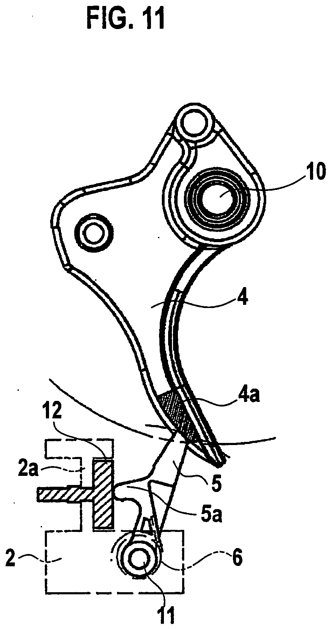

FIG. 11 shows the third embodiment of the present invention, and is a side view showing a state where the stopper member interferes with the lever.

### BEST MODE FOR CARRYING OUT THE INVENTION

A description will be made below of embodiments of the present invention based on the drawings.

### (First Embodiment)

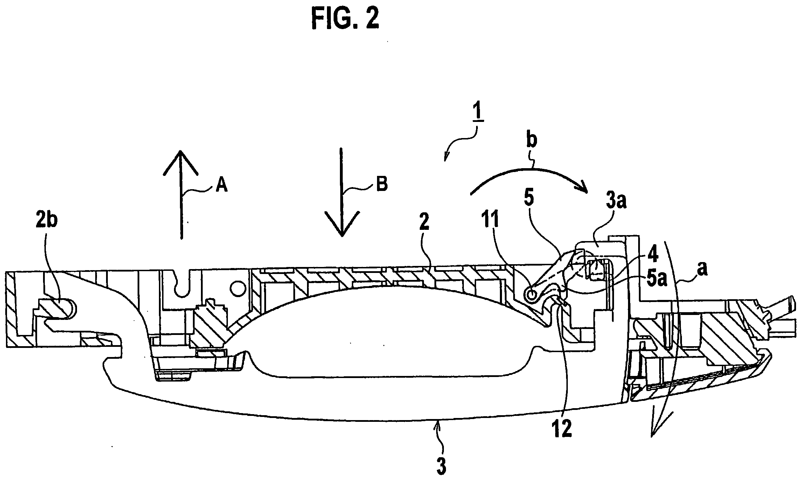

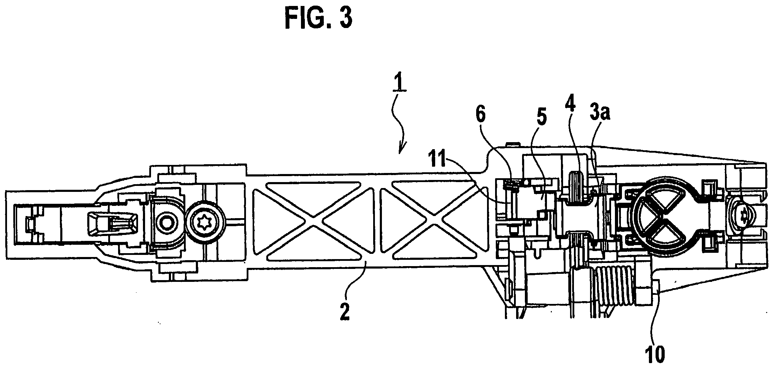

In FIG. 2 to FIG. 4, an automotive door handle device 1 includes: a bracket 2 as a door body side member fixed to a door body (not shown); a grip-type handle 3 provided on a support portion 2b of the bracket 2 so as to be freely rotatable; a lever 4 rotationally shifted from a waiting position to a lock releasing position in synchronization with a rotation operation of the handle 3; a door locking mechanism (not shown) coupled to the lever 4 while interposing a wire (not shown) therebetween; a stopper member 5 provided on the bracket 2 so as to be freely rotatable; and a spring 6 (shown in FIG. 3) as urging means for urging the stopper member 5 to a waiting position side. Note that, in FIG. 3, reference symbol A denotes a direction of an acceleration on a collision side, and reference symbol B denotes a direction of an acceleration on a non-collision side.

A most part of the handle 3 is exposed to an outside of a door panel (not shown), and the handle 3 is rotationally operated from a door closing position to a door opening position by being operated in a direction of an arrow a in FIG. 2. On a tip end side of the handle 3 in such a rotation, an engagement portion 3a protruded to a vehicle cabin side is provided.

The lever 4 is provided on the bracket 2 so as to be freely rotatable about a support shaft 10, and is rotationally shifted about the support shaft 10 between the waiting position and the lock releasing position. At the lock releasing position, locking of the door locking mechanism (not shown) is released.

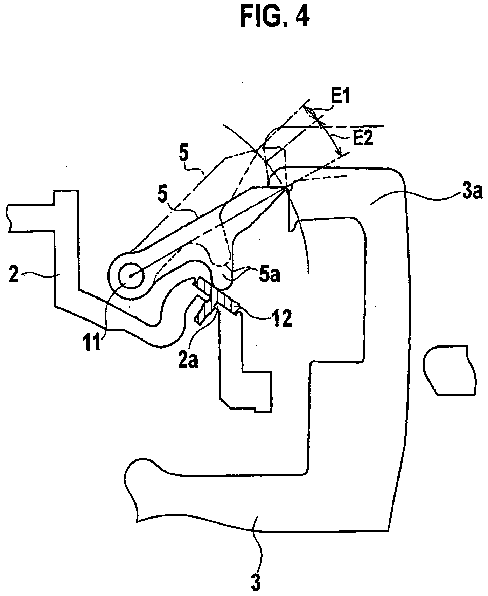

As shown in FIG. 4 in detail, the stopper member 5 is supported on a rotation support shaft 11 so as to be freely rotatable thereabout, and moves between a waiting position (virtual line position of FIG. 4) of not interfering with the engagement portion 3a of the handle 3 and an interfering position (solid-line position of FIG. 4) of interfering with the engagement portion 3a. Here, in the stopper member 5, while taking, as a boundary, a point where a rotation orbit of a tip end of the stopper member 5 and a movement orbit of a tip end of the engagement portion 3a of the handle 3 intersect each other, a section on the waiting position side from such an intersecting point becomes a non-interference section E1, and a section on the interfering position side from the intersecting point becomes an interference enabled section E2.

A rotation regulating portion 5a is provided on the stopper member 5. On a position of the bracket 2, which is located on the rotation orbit of the rotation regulating portion 5a, an other-side rotation regulating portion 2a is provided. On a thrusting surface of the other-side rotation regulating portion 2a, a shock absorption member 12 as stopper holding means is provided. When the stopper member 5 rotates to the interfering position, the stopper-side rotation regulating portion 5a thrusts against the other-side rotation regulating portion 2a while interposing the shock absorption member 12 therebetween, and regulates the rotation of the stopper member 5. The shock absorption member 12 is formed of, for example, a rubber material excellent in shock absorption property.

In the above-described configuration, when the impact acceleration A in the direction of moving the handle 3 from the door closing position to the door opening position is inputted to the door body, the handle 3 relatively moves in an opening position direction a by this impact acceleration, and following this movement, the lever 4 moves in a door releasing position direction. Moreover, the stopper member 5 moves in an interfering position direction b against spring force of the spring 6 by the impact acceleration.

Here, the stopper member 5 moves to the interference enabled section E2 earlier than the handle 3. Then, when the stopper member 5 moves to the interfering position, the stopper-side rotation regulating portion 5a and the other-side rotation regulating portion 2a thrust against the shock absorption member 12, and an impact caused by the movement of the stopper member 5 is absorbed by the shock absorption member 12. Therefore, a bound speed of the stopper member 5 becomes slow. Owing to such a decrease of the bound speed, the stopper member 5 stays in the interference enabled section E2 for a long time, and accordingly, a probability that the stopper member 5 may be engaged with the engagement portion 3a of the handle 3 is increased, and the movement of the handle 3 in the opening position direction a can be surely inhibited. From the above, the door can be surely prevented from opening by the impact acceleration at the time of the side collision and so on.

Moreover, when the impact acceleration B in the direction of moving the handle 3 from the door opening position to the door closing position is inputted to the door body, the door does not open by the impact acceleration in this direction.

### (Second Embodiment)

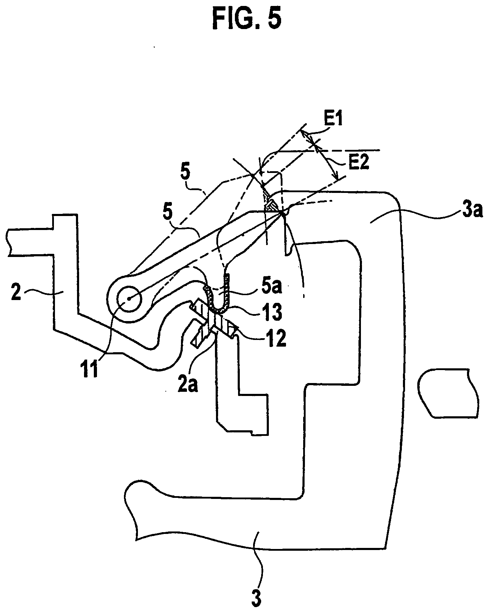

FIG. 5 is a main portion cross-sectional view of peripheries of a stopper member and a handle according to a second embodiment of the present invention.

As shown in FIG. 5, stopper holding means of this second embodiment is composed of shock absorption members 12 and 13 provided on thrusting surfaces of both of the other-side rotation regulating portion 2a of the bracket 2 and the stopper-side rotation regulating portion 5a of the stopper member 5.

Other configurations are similar to those of the above-described first embodiment, and accordingly, a duplicate description will be omitted. Note that, in FIG. 5, the same reference numerals are assigned to the same constituent spots as those in the configuration of the above-described first embodiment, and clarification of the constituent spots concerned is achieved.

Also in this second embodiment, the bound speed of the stopper member 5 becomes slow, and accordingly, the door can be surely prevented from opening by the impact acceleration at the time of the side collision and so on.

Note that the stopper holding means may be composed of the shock absorption member 13 provided only on the thrusting surface of the stopper-side rotation regulating portion 5a.

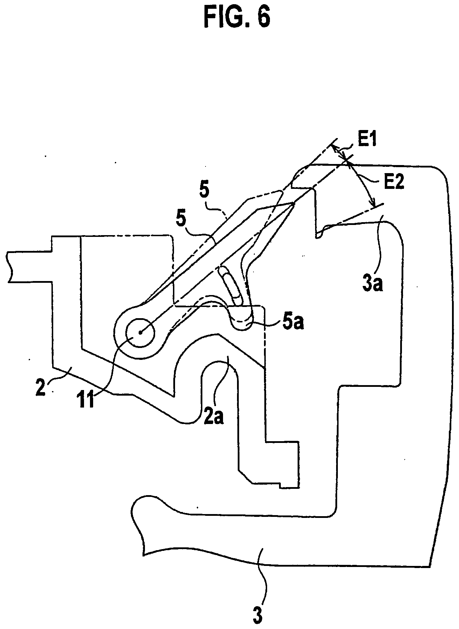

FIG. 6 and FIGS. 7(a) and 7(b) show an example not forming part of the present invention: FIG. 6 is a main portion cross-sectional view of peripheries of a stopper member and a handle; FIG. 7(a) is a plan view of a state where the stopper member is located at the waiting position; and FIG. 7(b) is a plan view of a state where the stopper member is located in the interference enabled section.

As shown in FIG. 6, stopper holding means of this example is composed of a rib 14 as a movement resisting portion provided on the stopper member 5. The rib 14 is composed so as not to interfere with the bracket 2 as shown in FIG. 7 (a) in a process where the stopper member 5 moves through the non-interference section E1, and so as to slide on a sliding surface 2c provided on a side surface of the bracket 2 as shown in FIG. 7(b) in a process where the stopper member 5 moves through the interference enabled section E2. Specifically, the rib 14 becomes a movement resistance in the interference enabled section E2 of the stopper member 5.

Other configurations are similar to those of the above-described first embodiment, and accordingly, a duplicate description will be omitted. Note that, in FIG. 6, the same reference numerals are assigned to the same constituent spots as those in the configuration of the above-described first embodiment, and clarification of the constituent spots concerned is achieved.

In the above-described configuration, the stopper member 5 receives the movement resistance upon entering the interference enabled section E2, and accordingly, a moving speed of the stopper member 5 becomes slow. Owing to such a decrease of the moving speed, the stopper member 5 stays in the interference enabled section E2 for a long time, and accordingly, a possibility that the stopper member 5 may be engaged with the engagement portion 3a of the handle 3 is increased, and the movement of the handle 3 in the opening position direction can be surely inhibited.

In this example, the movement resisting portion is composed of the rib 14 of the stopper member 5, and accordingly, a configuration of the movement resisting portion is simple.

Note that, in this example, the movement resisting portion is composed of the rib 14 provided on the stopper member 5; however, the movement resisting portion may be composed of a rib provided on the bracket 2 as the door body side member, or may be composed of ribs provided on both of the stopper member 5 and the bracket 2.

### (Third Embodiment)

FIG. 8 to FIG. 11 show a third embodiment of the present invention: FIG. 8 is a main portion internal view of an automotive door handle device viewed from a vehicle inside; FIG. 9 is a front view showing arrangement of a stopper member and a lever; FIG. 10 is a side view showing a state where both of the stopper member and the lever are located at the waiting position; and FIG. 11 is a side view showing a state where the stopper member interferes with the lever.

In FIG. 8 to FIG. 11, in an automotive door handle device 20 of the fourth embodiment, a rotation direction of the stopper member 5 is different from that in the above-described first embodiment. Specifically, the stopper member is disposed so that the rotation support shaft 11 can go along an up-and-down direction of the vehicle in the first embodiment, and meanwhile, in this third embodiment, the stopper member 5 is disposed so that the rotation support shaft 11 of the stopper member 5 can be located at a position rotated by 90 degrees with respect to the position of the rotation support shaft 11 of the first embodiment, that is, can go along a fore-and-aft direction of the vehicle. Moreover, the stopper member 5 is disposed so that a direction connecting a rotation center thereof and a gravity center position thereof to each other can be a direction having a sufficient angle with respect to a direction of an impact acceleration from oblique forward of a vehicle body.

Moreover, the stopper member 5 is provided so as to be freely rotatable between a waiting position of not interfering with an engagement portion 4a of a lever 4 and an interfering position of interfering with the engagement portion 4a, and is urged to the waiting position side by the spring 6 as the urging means. Specifically, in this third embodiment, a subject with which the stopper member 5 is to interfere is not the engagement portion 3a of the handle 3 but the engagement portion 4a (displayed with hatching in FIG. 10 and FIG. 11 for clarification) of the lever 4. Moreover, the stopper member 5 is adapted to inhibit the lever 4 from moving to the lock releasing position side, and to thereby inhibit the handle 3 from moving to the door opening position side.

Other configurations are similar to those of the above-described first embodiment, and accordingly, the same reference numerals are assigned to the same constituent spots among the drawings, and a duplicate description will be omitted.

In the above-described configuration, when the impact acceleration A in the direction of moving the handle 3 from the door closing position to the door opening position is inputted to the door body (not shown) in a state of FIG. 10, the handle 3 moves in the opening position direction by this impact acceleration, and following this movement, the lever 4 moves in the door releasing position direction c. Moreover, the stopper member 5 moves in the interfering position direction b against the spring force of the spring 6 by the impact acceleration.

Here, as shown in FIG. 11, the stopper member 5 moves to the interference enabled section earlier than the lever 4. Then, when the stopper member 5 moves to the interfering position, the stopper-side rotation regulating portion 5a and the other-side rotation regulating portion 2a thrust against each other while interposing the shock absorption member 12 therebetween. Therefore, the bound speed of the stopper member 5 becomes slow. Owing to such a decrease of the bound speed, the stopper member 5 stays in the interference enabled section for a long time, and accordingly, a probability that the stopper member 5 may be engaged with the engagement portion 4a of the lever 4 is increased, and the movement of the handle 3 in the opening position direction can be surely inhibited. From the above, the door can be surely prevented from opening by the impact acceleration at the time of the side collision and so on.

In this third embodiment, the stopper member 5 is disposed so that the direction connecting the rotation center thereof and the gravity center position thereof to each other can be the direction having a sufficient angle with respect to the direction of the impact acceleration from the oblique forward of the vehicle body. Accordingly, the stopper member 5 is surely activated not only in the case where the impact acceleration is inputted from the side surface of the vehicle body but also in the case where the impact acceleration is inputted from the oblique forward of the vehicle body. Hence, the door can be surely prevented from opening by the impact acceleration at a time of the oblique forward collision and so on.

### INDUSTRIAL APPLICABILITY

In accordance with the present invention, there is provided the stopper holding means for elongating a holding time of the stopper member in the section where the stopper member is capable of interfering with the engagement portion. Accordingly, upon receiving the impact acceleration in the direction of moving the handle from the door closing position to the door opening position, the stopper member moves in the interfering position direction from the waiting position against the urging force of the urging means, and then, in the interference enabled section, the stopper member moves while spending a long time. Therefore, the stopper member can surely inhibit the handle from moving in the opening position direction.

## Claims

1. An automotive door handle device (1), comprising:
a handle (3) that is provided on a door body so as to be freely rotatable and moves between a door closing position and a door opening position;
a lever (4) that rotates from a waiting position to a lock releasing position in synchronization with an operation of the handle (3) from the door closing position to the door opening position, and releases locking of a door locking mechanism; and
a stopper member (5) that is provided on the door body so as to be freely rotatable, is movable between a waiting position of not interfering with an engagement portion (3a; 4a) provided on either one of the handle (3) and the lever (4) and an interfering position of interfering with the engagement portion (3a; 4a), and is urged to the waiting position side by urging means (6); and
a stopper holding means (12) can elongate a holding time of the stopper member (5) in a section (E2) where the stopper member (5) is capable of interfering with the engagement portion (3a, 4a)
wherein, when an impact acceleration in a direction of moving the handle (3) from the door closing position to the door opening position is inputted to the door body, the stopper moves in an interfering position direction from the waiting position against urging force of the urging means (6) by the impact acceleration, is engaged with the handle (3) or the lever (4), and inhibits the lever (4) from moving to the lock releasing position,
**characterized in that**
one end of the stopper member (5) is supported on a rotation support shaft (11) of the door body side so as to be freely rotatable thereabout and urged to the waiting position side by urging means (6),
the other end of the stopper member (5) can interfere with the engagement portion (3a, 4a) provided on either one the handle (3) and the lever (4) at the interfering position,
a rotation regulating portion (5a) is provided on a middle portion of the stopper member (5),
the stopper holding means is a shock absorption member (12) provided on a thrusting surface of at least either one of the stopper-side rotation regulating portion (5a) of the stopper member (5) and an other-side rotation regulating portion (2a) against which the stopper-side rotation regulating portion (5a) thrusts at the interfering position.

2. The automotive door handle device (1) according to claim 1,
wherein the stopper member (5) is disposed so that the rotation support shaft (11) that freely rotatably supports the stopper member (5) on the door body can go along a fore-and-aft direction of a vehicle.

## Patentansprüche

1. Eine Türgriffvorrichtung (1) für ein Automobil, aufweisend:
einen Griff (3) der so an einem Türkörper bereit gestellt ist, das er frei dreht und sich zwischen einer Türschließposition und einer Türöffnungsposition bewegt,
ein Hebel (4), der sich von einer Warteposition zu einer Verriegelungsfreigabeposition in Synchronisation mit einer Betätigung des Griffs (3) von der Türschließposition zu der Türöffnungsposition dreht, und der eine Verriegelung eines Türverriegelungsmechanismus freigibt, und
ein Stoppglied (5), das an dem Türkörper bereit gestellt ist, und frei beweglich ist, zwischen einer Warteposition bei der es nicht mit einem Eingreifabschnitt (3a, 4a) interferiert der entweder an dem Griff (3) oder dem Hebel (4) bereitgestellt ist und einer Eingreifposition des Interferierens mit dem Eingreifabschnitt (3a, 4a), und das zu der Wartepositionsseite mittels eines Spannmittels (6) gespannt wird, und
ein Stopper-Haltemittel (12), das eine Haltezeit des Stoppglieds (5) in einer Sektion (E2) verlängern kann wo das Stoppglied (5) in der Lage ist mit dem Eingreifabschnitt (3a, 4a), einzugreifen,
wobei wenn eine Einschlagbeschleunigung in einer Richtung des Bewegens des Türgriffs (3) von der Türschließposition zu der Türöffnungsposition in den Türkörper eingebracht wird, der Stopper sich durch die Einschlagbeschleunigung in einer Interferierungspositionsrichtung von der Warteposition gegen die Kraft des Spannmittels (6) bewegt, und in Eingriff mit dem Griff (3) oder dem Hebel (4) gelangt, und verhindert, das der Hebel (4) sich zu der Verriegelungsfreigabeposition bewegt,
**dadurch gekennzeichnet, dass**
ein Ende des Stoppglieds (5) an einer Drehunterstützungsachse (11) der Türkörperseite unterstützt ist, um darum frei drehbar zu sein, und zu der Wartepositionsseite durch das Spannmittel (6) gespannt wird, wobei das andere Ende des Stoppglieds (5) mit dem Eingreifabschnitt (3a, 4a) interferieren kann, der entweder an dem Griff (3) oder dem Hebel (4) an der Eingreifposition bereit gestellt ist,
ein Rotationsregulierabschnitt (5a) an einem Mittelabschnitt des Stoppglieds (5) bereit gestellt ist,
das Stopper-Haltemittel ein Stoßdämpfungsglied (12) ist, das an einer Drückfläche entweder an dem stopperseitigen Rotationsregulierabschnitt (5a) des Stoppglieds (5a) oder an einem andersseitigen Rotationsregulierabschnitt (2a) vorgesehen ist, gegen welchen der stopperseitige Rotationsregulierabschnitt (5a) an der Eingreifposition drückt.

2. Die Türgriffvorrichtung (1) für ein Automobil gemäß Anspruch 1, wobei das Stoppglied (5) so vorgesehen ist, das sich die Drehunterstützungsachse (11), die das freie Drehen des Stopplieds (5) an dem Türkörper unterstützt, entlang einer Vorwärts- und Rückwärtsrichtung eines Fahrzeugs bewegen kann.

## Revendications

1. Dispositif de poignée de portière (1) pour automobile comprenant :
une poignée (3) qui est prévue sur un corps de portière de façon à pouvoir tourner librement et se déplacer entre une position de fermeture de portière et une position d'ouverture de portière,
un levier (4) qui tourne depuis une position d'attente jusqu'à une position de libération de verrou de façon synchronisée avec une manoeuvre de la poignée (3) depuis la position de fermeture de portière jusqu'à la position d'ouverture de portière, et qui libère le verrouillage d'un mécanisme de verrou de portière, et
un élément de butée (5) qui est prévu sur le corps de portière de façon à pouvoir tourner librement, qui est mobile entre une position d'attente consistant à ne pas interagir avec un organe de mise en prise (3a ; 4a) prévu sur l'un ou l'autre de la poignée (3) et du levier (4) et une position d'interaction consistant à interagir avec l'organe de mise en prise (3a ; 4a) ; et qui est contraint vers le côté de position d'attente par un moyen de sollicitation (6), et
un moyen de maintien de butée (12) peut allonger le temps de maintien de l'élément de butée (5) dans une section (E2) où l'élément de butée (5) peut interagir avec l'organe de mise en prise (3a ; 4a),
dans lequel, lorsqu'arrive sur le corps de portière une accélération d'impact, dans une direction de déplacement de la poignée (3) de la position de fermeture de portière à la position d'ouverture de portière, la butée se déplace dans une direction de position d'interaction depuis la position d'attente en réaction à la force de contrainte du moyen de sollicitation (6) grâce à l'accélération d'impact ; il se met en prise avec la poignée (3) ou le levier (4), et il empêche le levier (4) de se déplacer vers la position de libération de verrou,
**caractérisé en ce que**
une extrémité de l'élément de butée (5) est supportée sur un axe de support de rotation (11) du côté du corps de portière de façon à pouvoir tourner librement autour de celui-ci ; et elle est contrainte vers le côté de la position d'attente par le moyen de sollicitation (6),
l'autre extrémité de l'élément de butée (5) peut interagir avec l'organe de mise en prise (3a ; 4a) prévu sur l'un ou l'autre de la poignée (3) et du levier (4) à la position d'interaction,
un organe de régulation de rotation (5a) est prévu sur une partie médiane de l'élément de butée (5),
le moyen de maintien de butée est un élément d'amortissement de choc (12) prévu sur une surface de poussée d'au moins l'un ou l'autre de l'organe de régulation de rotation (5a) du côté butée de l'élément de butée (5) et de l'organe de régulation de rotation (2a) de l'autre côté contre lequel pousse l'organe de régulation de rotation (5a) du côté butée au niveau de la position d'interaction.

2. Dispositif de poignée de portière (1) pour automobile selon la revendication 1,
dans lequel l'élément de butée (5) est disposé de sorte à ce que l'axe le support de rotation (11) qui supporte en rotation libre l'élément de butée (5) sur le corps de portière puisse se déplacer le long d'une direction d'avant en arrière d'un véhicule.
